# EUROPEAN PATENT APPLICATION

(11) **EP 1 638 009 A2**
(43) Date of publication of application: **22.03.2006**
(21) Application number: 05108627.0
(22) Date of filing: 19.09.2005
(51) Int. Cl.: G06F 15/173, G06F 15/80

(54) **Modular electronic card for a communication network**

(30) Priority: 21.09.2004 IT UD20040181
(71) Applicant: EUROTECH SpA, 33020 AMARO (UD) (IT)
(72) Inventor: Rossi, Mauro, 33013 Gemona del Friuli (UD) (IT); Tecchiolli, Giampietro, 38100 Trento (IT)
(74) Representative: Petraz, Davide Luigi

(57) **Abstract**

Modular electronic card (20) to support and manage a plurality of calculation nodes (21) and their interconnections with a three-dimensional topology, wherein each node (21) comprises a card (24) carrying at least a processing unit (22), a memory battery (23) and connection members (25) with the modular card (20). The modular electronic card (20) has a spatial density of the calculation nodes (21) equal, on the surface, to at least 0.8 nodes per square decimeter, given a node (21) that has at least 108 differential connections divided into 12 independent groups, two for each of the fundamental directions (x, y, z) of the 3D topology.

## Description

### FIELD OF THE INVENTION

The present invention concerns a modular electronic card to support and manage a plurality of calculation nodes and their interconnections, and also to manage possible connections to the outside of at least part of the calculation nodes, so as to form an expandable communication network.

By calculation node we mean a component equipped with at least a processing unit, at least a memory unit, and connection elements that allow them to be connected to the modular card and/or external components.

### BACKGROUND OF THE INVENTION

Applications are known for high performance calculation (HPC) concerning various scientific fields, particularly nuclear physics, bio-informatics and others, wherein the solution to differential equations, also of a high level, can be brought down to elementary operations which are carried out in parallel by a large number of calculators that are connected in a network.

Apart from the presence of a large number of interconnected processors, these applications need an efficient and effective communication network between the individual calculation nodes. This allows the information processed by one processor to quickly reach the other nodes involved and present on the grid.

In more complex cases, the network of processors is of the type with a three-dimensional (3D) topology. In 3D applications, very often the calculation node has communication channels that connect it to the six adjacent nodes; each of these interfaces in turn with its first 6 neighbours, and so on. In this way the grid with the three-dimensional topology is created, which is usually obtained physically by combining together tracks on the printed circuit, connectors and cables.

It is evident, therefore, that in this case (3D) every node must have 6 independent communication channels, 2 for each of the three fundamental directions x, y z (or x+, x-, y+, y-, z+, z-). There may be a further complication of the structure if the link is not of the two-directional type but there is the need to provide two different independent lines for the data that travel from one processor to the other, in one direction or the other; this means that it is necessary to manage 12 independent links for every node (2 for each of the 6 communication channels, one to manage input and one to manage output).

It is also evident that in parallel calculation the I/O channels mentioned above must allow the transfer of a quantity of information that is as high as possible when compared to the unit of time. In obtaining this, a decisive role is played by the number of data that travel in parallel on the individual link (width) and by their speed (frequency).

There is another fundamental tendency, apart from the one just cited, in high performance calculations, that is, the one connected to the increase in density of the calculation nodes on the systems.

Both tendencies cited (speed of data and density of nodes), if as desirable they are taken to extremes, come into conflict with features connected to bulk and technology. Increasing the density of the nodes and/or increasing the quantity of data transferred in the unit of time from one calculation node to another entail the need to deal with and solve problems that are anything but banal as far as size, method of production and of assembly, etc. are concerned.

Often, in the attempt to maximize the above tendencies, the calculation nodes are arranged on a supporting structure consisting of a kind of housing with attached high-density interconnection for a certain number of calculation nodes.

The supporting structure, often consisting of an electronic card, must have characteristics of a modular nature: the final grid with three-dimensional topology of calculation nodes is thus obtained by connecting several of these supporting structure (via connector-cable-connector or connector-printed circuit-connector). Given the same dimensions of the supporting structure, the larger the number of nodes that can be housed thereon, the greater the width and speed of the links, the higher will be the density of calculation nodes of the final system and the performance obtainable in the structure itself. It must be remembered that the supporting structure in question have a certain relevance for the purposes of the functional management of the system too; since they are ordered sub-modules of the final grid, a kind of hierarchy is configured.

In any case, having recourse to these housing structures (cards) has the main advantage of maximizing locally the density of the nodes and the lines of communication between them. For example, they can be connected directly by means of the tracks of the printed circuit of which the support is made up; therefore, there is no need locally for cables or other bulky connection systems.

One considerable problem emerges because in this type of application, in order to connect together the various nodes that are housed on the supporting cards, it is necessary to manage a high number of high speed digital signals by using tracks with a controlled impedance; for example, differential signals of 100 ohms of the LVDS type, single conductor signals at 50 ohms, etc. Moreover, it is then necessary to manage an equally high number of signals to allow the supporting card, of a modular type, to connect to other structures of the same type in order to generate a grid with a three-dimensional topology of nodes of the desired dimensions.

This is a typical situation which occurs when cards and systems are designed in the field of high performance calculations (HPC), of which the supporting card mentioned above is a part. In order to manage these signals it is necessary to use particular structures so as to have lines of transmission with controlled impedance; here the tracks are placed between mass islands (a sort of sandwich-type structure) or other similar configurations. These structures allow to control the impedance and keep it constant along the electric layout. The quicker the time taken by the signal to rise and the longer the track, the more fundamental it is to have a good control of the values of impedance of the line.

As mentioned above, applications in high performance calculations entail the presence of a high number of signals which, arranged in groups, move from one point to another, generating a sort of network of three-dimensional communication between the calculation nodes present on the supporting card; moreover, other groups of signals reach connectors, for example on board the card, which allow to couple together several supporting cards in order to obtain a grid with a 3D topology of the desired dimensions. Therefore, a high number of signals must be managed using transmission lines with controlled impedance and, if the rapid digital signals are to be managed correctly, it is necessary to have many layers available on the printed circuit, since inevitably the same will often find they have to travel in parallel mode, following the same direction.

It must be remembered that increasing the number of layers in a printed circuit with lines having a controlled impedance leads to an increase in the thickness thereof, and/or to the introduction of special dielectrics.

Based on all the considerations set forth above, a limit has been found in the field in the lack of a modular card able to support a suitably large number of calculation nodes, to connect them to each other efficiently, to allow connection with analogous external systems, without entailing an unwanted increase in the size and bulk, and problems of compatibility with the standards of electronic and telecommunications apparatuses present on the market.

Purpose of the present invention is therefore to achieve a supporting and interconnecting structure (card) to manage at least 16 high performance calculation nodes arranged on a grid with a three-dimensional topology, which will allow to overcome all the disadvantages set forth above.

### SUMMARY OF THE INVENTION

The present invention is set forth and characterized in the main claim, while the dependent claims describe other characteristics or variants to the main inventive idea.

In accordance with the purpose identified above, the invention concerns a modular card to support and manage a plurality of calculation nodes (for example 16), interconnected with each other so as to generate a functional three-dimensional topology, which supports expansion means towards the outside for connection to one or more other analogous modular cards, or to other external systems.

The modular card according to the invention is suitable to be part of an integrated system consisting of a very high number of calculation nodes, for example 256, 512, 1024 or more, operating in parallel in the resolution of highly complex problems, for example in the scientific field.

To be more exact, the structure (card) according to the present invention is suitable to optimize the following requirements, often in conflict with each other:
- to maximize the density of the calculation nodes, given the same overall bulk, both in the plane and as thickness, with respect to other types of modular supports already in existence;
- to maximize the transfer of information (great width of the data links and high frequency of transmission; signals traveling on paths with controlled impedance, etc.);
- to allow it to be produced and worked with materials, technologies, processes and apparatuses that are commonly available on the market;
- to guarantee the compatibility of size with a series of mechanical constraints commonly required in the field of industrial electronics and telecommunications, for example the sub-racks present in the racks or cabinets where a plurality of said cards, connected to each other in a network, are housed.

In the card according to the present invention, from the point of view of the interconnections, each housing for calculation node has 6x2 independent links (6 communication channels), two for each of the fundamental directions. Each node allows information to be transferred at an overall rate in the range of Gbyte/sec.

The card is of the modular type: by connecting together several cards (via connector-cable-connector and connector-printed circuit-connector lines) a grid of nodes with a three-dimensional topology of the desired sizes can be obtained.

From the geometric-structural point of view the main characteristics of the system obtained with the modular card according to the present invention in the preferential embodiment are as follows:
- each calculation node is implemented on a single electronic card, and has at least a relative processing unit, memory means and means to connect with at least the adjacent nodes in the grid with the 3D topology;
- the electronic card defining a calculation node is housed on the supporting card according to the invention together with other n-1 cards, in the embodiment that provides a supporting card for n calculation nodes;
- each calculation node is connected with 6 communication channels (x+, x-, y+, y-, z+, z-);
- for every communication channel relating to a calculation node there are 2 independent links (one for input, one for output);
- on the card where there is the calculation node there are connection blocks (of the card-card type) to the supporting card, one for each of the communication channels (x+, x-, y+, y-, z+, z-); the 6 blocks are arranged on two differential connectors;
- each connection block as in the previous point incorporates the two links involved in the communication channel with which it is concerned.

From the electric-functional point of view, the main characteristics of the preferential embodiment are as follows:
- each of the 12 links (2 for each of the 6 channels) is 8 data bits wide (plus clock);
- the interconnection is of the LVDA type, and therefore the connections are made with differential lines with controlled impedance (100 ohms);
- the frequency of transmission through the LVDS lines (bus) can reach hundreds of MHz (for example 200 MHz); the data transfer rate for every link (bus) can reach hundreds of Mbyte/sec (for example 400 Mbyte/sec); the overall data transfer rate can reach several Gbyte/sec.

According to the invention, in the case of nodes characterized by 6 connection channels, each formed by 2 independent differential links with a width of 8 data bits + clock, for a total of 108 differential interconnections, the modular supporting card has a high spatial density of the calculation nodes, equal in the plane to at least 0.8 nodes per square decimeter.

In other words, the ratio between planar surface, expressed in dm², of the supporting card according to the invention (having this specification of 108 differential interconnections per node), and the number of nodes arranged thereon, is equal to 0.8. This maximization of the density of the calculation nodes allows to ensure a very high calculation capacity without at the same time increasing the bulk.

The high density has been obtained, according to the invention, by means of a miniaturization of the calculation nodes and also of all the entities involved in the interconnection.

In producing the printed circuit for the card, first of all the differential structures with controlled impedance involved in the transmission of the digital signals were miniaturized.

Moreover, the printed circuit has been designed and produced with the method of sub-groups, so as to render the management of the tracks more independent from the presence of the connection holes between the various planes of the printed circuit, in order to increase in this way the volumetric density of the interconnections.

The production method has also provided to miniaturize the connectors used on the supporting card, for example the card-to-card connectors for housing the nodes, the card-to-cable connectors and the card-to-bottom card connectors for amplifying the network with the 3D topology to other cards.

According to a characteristic of the invention, in order to produce the printed circuit dielectric substrata were used, of a type easily found on the market but characterized by high temperatures of vitreous transition, in the range of 175-180°C, in order to improve the thermomechanical stability of the card as will be described in more detail hereafter.

According to another characteristic, the modular card according to the invention was made so as to be compatible with the standard mechanics typically used in industrial and telecommunications electronics, such as sub-racks and cabinets. This has been obtained by suitably sizing the card and choosing, for the size on the surface, one of the discreet values on the scales that regulate said standards. The values chosen, with the aim of maximizing the density of the nodes, are as high as possible compatible with all the other constraints presented here.

Moreover, according to the invention, the modular card has bulk sizes compatible with the standard guides for cards used to accompany the insertion and withdrawal of electronic cards through the standardized guides in mechanics of industrial and telecommunications electronics (that is, racks).

Since the printed circuit has to guarantee a very high number of interconnections by means of transmission lines with controlled impedance, it is necessarily of the multi-layer type and with a relatively great thickness (especially when common dielectric substrata are used); the higher the number of interconnections to be managed locally, the higher the number of layers needed and hence the greater the thickness will be.

In order to make the modular card according to the invention compatible with the guides commonly used in industrial and telecommunications electronics (designed for cards with a nominal thickness of 1.6 mm), the relative printed circuits have been designed so as to be milled (with a control on the z axis) on the edges, with the removal of material until a thickness of 1.6 mm is reached, compatible with the guides as mentioned above.

The use of dielectrics with a high temperature of vitreous transition (175-180°C), as explained, also has a positive effect on obtaining a high level of planarity of the card, which is required both for assembly and also for use.

For the same purpose, the printed circuit is designed so as to be thermo-mechanically balanced with respect to its median plane (symmetry of the copper distribution with respect to the plane of symmetry). This guarantees a good planarity during and after all the steps: production of the printed circuit, assembly, use.

The planarity of the supporting card is fundamental, for example, when it has to be inserted into the rack, making the female differential connectors on board the card couple with the male ones present on the backplane printed circuit housed in the sub-rack containing the cards.

In order to guarantee good homogeneity and uniformity of the impedance along the different lines, the method has provided a non-functional distribution of the copper on the signal planes. Due to the very nature of production of the printed circuit, this makes the value of the thicknesses of the dielectric substratum stable in the various points of the card, irrespective of the density of tracks at that point. This ensures a good control of the impedance of the transmission lines, especially when they are obtained with particularly miniaturized structures and hence subject to greater criticalness.

As said, the card according to the invention is of the modular type and, by means of suitable differential connectors placed on board the card, the network with the 3D topology can be amplified as desired.

In order to manage and facilitate the steps of inserting the card into the relative rails (guides) of the sub-rack designed to house the cards, and in order to safeguard the integrity of the system, a preferential solution provides that the card has an aluminum frame, designed ad hoc, including pin-type handles which, pivoting on a suitable bar present on the sub-rack, regulate the movement thereof.

In the preferential embodiment, the printed circuit at the base of the card according to the invention has the following characteristics:
- multi-layer;
- 16 layers;
- made with the sub-groups method (2 subgroups of 8 layers);
- nominal thickness of the dielectric substrata from 0.150 mm;
- total nominal thickness from 2.7 mm;
- local thickness of the milling area (for coupling guides/racks) from 1.6 mm +/- 10%;
- through hole from 0.3 mm on bumps from 0.6 mm;
- blind hole on the two sub-groups from 0.25 mm on bumps from 0.5 mm;
- configurations for management of differential signals characterized by width of 4 mils [; thickness =] and insulation 6 mils.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 shows an example of a calculation node suitable to be assembled on a modular card for generating an HPC communication network with a 3D topology according to the present invention;
- fig. 2 shows a modular card according to the invention of the type able to house 16 calculation nodes like that shown in fig. 1;
- figs. 3a and 3b show schematically the connection topology of the 16 calculation nodes housed in the modular card shown in fig. 2;
- fig. 4 shows the topology obtained with the connection of 16 modular cards like that shown in fig. 2.

### DETAILED DESCRIPTION OF A PREFERENTIAL FORM OF EMBODIMENT OF THE INVENTION

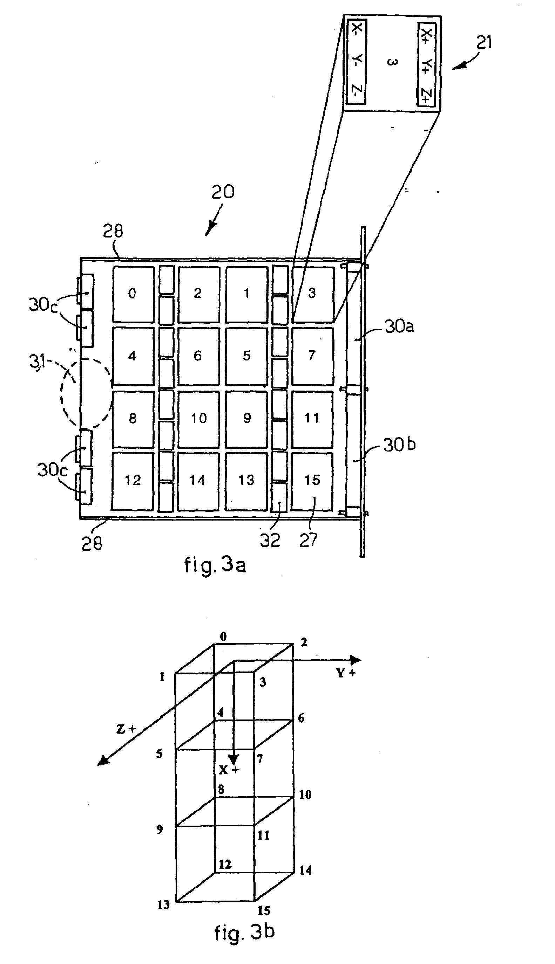

With reference to the attached figures, a modular card to support and manage a plurality of calculation nodes 21 is denoted in its entirety by the reference number 20. Each calculation node 21 can be defined as an electronic card 24 on which are assembled (fig. 2) at least a processing unit 22, memory means 23 and means to assemble and connect the modular card 20.

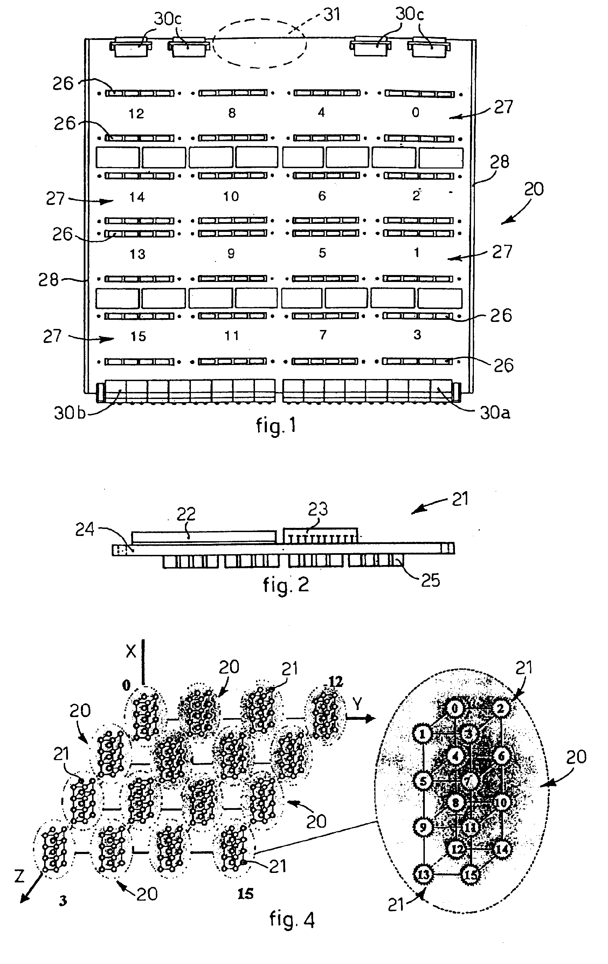

The modular card 20, in the preferential embodiment shown in fig. 2, functions as a support for 16 cards 24 of the type as shown in fig. 1, each one defining a calculation node 21, which form an elementary cell of the 3D topology network which can be amplified by connecting several supporting cards 20, as shown schematically in fig. 4.

To be more exact, the modular card 20 has 16 housing areas 27, numbered from 0 to 15 in fig. 1, each of which is provided with connectors 26 suitable to cooperate with the connection means 25 provided on the card 24 for the assembly and electric connection of the relative calculation node 21. The size of the housing areas 27, like that of the reciprocal connection tracks, is optimised in order to ensure maximum possible density of the nodes, equal to at least 0.8 nodes per dm2 of planar surface of the modular card 20.

The modular card 20 has at least two edges 28, on opposite sides, reduced in thickness by means of milling so as to reach a thickness equal to about 1.6 mm; this is to allow coupling with the standardized guides of the containing racks of the group of cards 20.

The connection means are installed in proximity with the edges, and allow the connection of the modular card 20 to the other cards which form the integrated modular system; the example shown in fig. 4 shows 16 of said cards 20, each comprising 16 calculation nodes 21, connected together in an architecture with a three-dimensional topology network, as shown in fig. 3b too.

To be more exact, in this case, first connectors 30a and 30b are present for the connection to analogous modular cards 20 in a first direction, for example z-, z+, second connectors 30a and 30b for connection in a second direction, for example γ-, y+, and third connectors 30c for connection in a third direction, for example x-, x+.

Along one edge of the modular card 20 a free area 31 is made, reserved for the control electronics. In an intermediate position between the housing areas 27 there are also the feed modules 32 for the relative calculation nodes 21 (an independent module for every node).

The modular card 20 is made with a multi-layer obtained by means of the sub-group method and, in the case of 16 layers, is obtained by means of coupling two packets each of 8 layers.

Thanks to the miniaturization of the components and the connection systems, the modular card 20 allows to maximize the density of the calculation nodes 21, given the same bulk both in plane and also in thickness, allowing to achieve integrated systems with a very high calculation capacity.

It is clear, however, that modifications and/or additions of parts may be made to the modular card 20 as described heretofore, without departing from the field and scope of the present invention.

## Claims

1. Modular electronic card to support and manage a plurality of calculation nodes (21) and their interconnections with a three-dimensional topology, wherein each node (21) comprises a card (24) carrying at least a processing unit (22), a memory battery (23) and connection means (25) with said modular card (20), **characterized in that** it has a spatial density of said calculation nodes (21) equal, in the plane, to at least 0.8 nodes per square decimeter, given a node (21) that has at least 108 differential connections divided into 12 independent groups, two for each of the fundamental directions (x, y, z) of the 3D topology.

2. Electronic card as in claim 1, **characterized in that** it is suitable to support 16 of said calculation nodes (21).

3. Electronic card as in claim 1 or 2, **characterized in that** it includes connection means (30a, 30b, 30c) with analogous cards in the three directions of space (x, y, z) so as to form with said other cards a network of calculation nodes with a three-dimensional topology further expandable by means of others of said cards.

4. Electronic card as in any claim hereinbefore, **characterized in that** it has a size compatible with the standard size typically used in industrial and telecommunications electronics.

5. Electronic card as in any claim hereinbefore, **characterized in that** it has the printed circuit with edges (28), at least on two opposite sides, having a possibly reduced thickness compatible with the standard measurements of the assembly guides in containing structures typically used in industrial electronics and in telecommunications.

6. Electronic card as in any claim hereinbefore, **characterized in that** it includes means able to safeguard the integrity of the card itself during its steps of insertion into and removal from the racks typically used in industrial electronics and in telecommunications.

7. Electronic card as in any claim hereinbefore, **characterized in that** it includes a printed circuit with a multi-layer configuration achieved with the sub-group method.

8. Electronic card as in any claim hereinbefore, **characterized in that** it includes a printed circuit made on a dielectric substratum with a medium to high temperature of vitreous transition, in the range of 175-180°C.

9. Electronic card as in any claim hereinbefore, **characterized in that** it includes a printed circuit having a high level of symmetry in the distribution of the physical masses with respect to the median plane.

10. Electronic card as in any claim hereinbefore, **characterized in that** it includes a printed circuit wherein a procedure has been implemented to distribute the copper in the layers involved in the management of the interconnections.
